(19)

Europäisches
Patentamt
European
Patent Office
Office européen
des brevets

(11)　**EP 2 194 344 A1**

(12)　**EUROPEAN PATENT APPLICATION**

(43) Date of publication:
**09.06.2010 Bulletin 2010/23**

(51) Int Cl.:
**F25B 41/06** *(2006.01)*

(21) Application number: **09177665.8**

(22) Date of filing: **01.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **02.12.2008 IT PD20080355**

(71) Applicant: **Carel Industries S.r.l.**
**35020 Brugine (PD) (IT)**

(72) Inventors:
 • **Nalini, Luigi**
  **35121 Padova (IT)**
 • **Lamanna, Biagio**
  **35100, Padova (IT)**

(74) Representative: **Modiano, Micaela Nadia et al**
 **Modiano & Partners**
 **Via Meravigli, 16**
 **20123 Milano (IT)**

(54)　**Method and control device for controlling a motorized thermostatic valve of a refrigeration machine**

(57)　A control method (10) and a control device (105) that performs it, for controlling a motorized thermostatic valve (100) of a refrigeration machine (101) provided with a cyclic pumping compressor (102), the control method (10) comprising a sub-process (11) which is repeated in consecutive cycles when a predefined sampling time $\Delta t$ elapses, and comprising

- a step (12) for calculating a virtual superheating parameter SHv of the refrigeration fluid at the output (103) of an evaporator (104) of the refrigeration machine (101),

- a step (13) for modulating the motorized thermostatic valve (100) on the basis of the calculated value of the virtual superheating parameter $SH_V$,

this value being calculated, in a current cycle, as a weighted algebraic combination of

- a difference SHa between a superheating temperature Tsh and a saturation temperature Tse of the refrigeration fluid at the output (103), i.e., SHa = Tsh-Tse,

- a previous virtual superheating parameter SHvp, whose value is equal to the value assumed by the virtual superheating parameter SHv in the cycle that preceded the current cycle, if this is not the first cycle, otherwise with a value equal to a predefined value SHvo.

Fig. 1

## Description

The present invention relates to a method for controlling a motorized thermostatic valve of a refrigeration machine provided with a cyclic pumping compressor, and to a control device that performs the method.

In a machine with a refrigeration cycle, the advantages of using a compressor that adapts the delivered compression power to the refrigeration heat load required instantaneously by the use are currently known.

Among these advantages, the stability of the process and the better energy efficiency that is achieved with respect to a machine with a fixed-speed compressor and with on-off operation are certainly appreciated.

Generally, the assumption is shared that it is not technically feasible to provide the on/off driving of an ordinary fixed-speed compressor with excessively frequent cycles, for example more frequent than 6-10 cycles per hour.

This assumption is based on considerations regarding the fact that for excessively frequent cycles the mechanical stresses to which the components of the machine are subjected are too intense to ensure an appreciable life thereof.

Moreover, for excessively frequent cycles the motor overheats, due to closely spaced starts, to the full detriment of its life.

In order to adapt the refrigeration capacity to the actual required load, it is currently known to use compressors that can be throttled or compressors whose speed can be adjusted by means of an inverter.

Another known solution consists of refrigeration compressors with cyclic pumping operation.

In these compressors, the motor is kept stably in motion while a pneumatic device driven by a solenoid valve allows to activate or deactivate the compression action.

In particular, during a time reference interval tc, which according to the specifications is comprised generally between 13 and 30 seconds, the pumping action is present in an activity time ta, which is a fraction of the time interval tc, which can be modulated between a minimum time tam, generally 2 seconds, and a maximum time equal to tc, depending on the refrigeration power required by the use.

By modulating the activity time ta of the compressor, a modulation is in fact achieved of the refrigeration power, which therefore can vary, as a percentage with respect to the maximum deliverable power, approximately between tam/tc and tc/tc = 100%.

The inactivity time ti of the compressor, during the reference interval tc, is of course ti = tc-ta.

These refrigeration machines with cyclic pumping compressors, however, have aspects that can be improved.

A widespread requirement in the field of these machines in fact consists in controlling the throttling element, commonly known as thermostatic valve, so that it doses the correct quantity of refrigerant introduced in the evaporator, so as to utilize most of its exchange surface, at the same time ensuring the change of state of all the refrigerant that is introduced.

In this manner, any fractions of refrigerant that are still in the liquid state are in fact prevented from being entrained to the intake of the compressor, damaging it and causing efficiency losses.

In a dry expansion circuit, this control is based on the value of the superheating SH defined as the difference between the superheating temperature Tsh, i.e., the temperature of the superheated steam at the output of the evaporator, and its saturation temperature Tse, at which the change of state of the refrigerant actually occurs.

The control of the thermostatic valve to achieve correct dosage of the refrigerant in the evaporator is aimed at obtaining an optimization of the value of the superheating of the steam in output from the evaporator and is therefore based on maintaining an optimum value of the difference SH.

A low value of SH in fact reveals insufficient superheating, which indicates the possibility of the presence of liquid fractions at the output of the evaporator, while a high value of SH indicates that an excessive portion of the surface of the exchanger is not affected by the useful effect.

Currently known thermostatic valves are mainly of two types: self-actuated and motorized.

In self-actuated valves, or mechanical thermostatic valves, actuation of the flow control element is achieved by means of a membrane, on the opposite faces of which there act the saturation pressure Pse, whose detection is performed by means of a direct sampling of the pressure at the output of the evaporator, and the superheating pressure Psh, which corresponds to the superheating temperature Tsh, generated within a sealed bulb which contains a two-phase liquid and is thermally connected to the pipe in output from the evaporator.

The position of the membrane, and therefore of the flow control element, is determined by the difference between the two pressures.

Electronic motorized thermostatic valves have a device for controlling the position of the flow control element by means of an electric step motor which is driven by an electronic device on the basis of the superheating temperature signal Tsh, supplied by an electronic sensor, and of the saturation pressure signal Pse, converted electronically into saturation temperature Tse, detected at the output of the evaporator.

In both devices, the saturation pressure signal Pse follows instantaneously the actual value, while detection of the superheating temperature Tsh is affected by measurement delays with respect to the actual value which depend on the thermal constant of the sensor, which is on the order of several seconds.

Due to the greater inertia of the temperature sensor, these delays are more significant in self-actuated valves than in motorized valves.

This lack of uniformity of correspondence of the measured values induces, as is known, an instability in the control of the thermostatic valve.

An exemplifying circumstance of unstable operation is the starting of the compressor, during which the saturation pressure measurement Pse decreases rapidly due to the partial vacuum generated by the compressor, while the measurement of the superheating temperature Tsh varies more slowly.

A similar behavior, albeit far less pronounced, is observed in case of significant variations of the required refrigeration power, temperature variations of the cooled fluid, or variations of the power delivered by the compressor, throttling.

This instability manifests itself as hunting, which corresponds to alternating steps of opening and closure of the flow control element until equilibrium is reached.

It should be noted that during this hunting, periods of high superheating, which correspond to the excessive closure of the flow control element, are alternated with periods during which steam containing a fraction of liquid flows out, which correspond to the excessive opening of the flow control element.

During the operation of a cyclic pumping compressor, there is a frequent alternation of the active and inactive step as follows.

During the active step, the compressor aspirates refrigerant, the evaporation pressure that is established is determined by the balance between the flow-rate of steam produced by the evaporator and the aspirated flow-rate, and the superheating of the steam is a function of the degree of opening of the thermostatic valve and of the filling level of the evaporator.

In the subsequent inactive step, the compressor does not pump, but heat exchange continues, albeit with decreasing intensity, due to the difference in temperature between the cooled fluid and the refrigerant, which absorbs heat from it, increasing in pressure.

Correspondingly, during the inactive step the measurement of the difference SH decreases, because the pressure sensor transmits the variation rapidly, while the temperature sensor reacts more slowly due to the overall thermal inertia and due to the lack of flow.

The thermostatic valve therefore closes progressively but continues to supply the evaporator.

Thus, at the end of the inactive step the evaporator contains a quantity of refrigerant that is greater than the optimum value and the pressure reaches its maximum value.

The measurement of the superheating temperature Tsh of the steam in output from the evaporator also tends to increase, but to a smaller extent.

In the subsequent new active step, the compressor is activated again, causing the reduction of the measured saturation pressure Pse, which over time tends to assume a value that is similar to the value assumed in the preceding active step.

The refrigerant in the evaporator boils, a fact which can cause the entrainment of particles of liquid to the compressor.

The temperature sensor, struck by liquid refrigerant, undergoes a sudden cooling, and by detecting a rapid decrease in the measured superheating temperature Tsh, causes the rapid closure of the thermostatic valve.

Therefore, the operation of a machine provided with a cyclic pumping compressor induces the control of the thermostatic valve to impart thereto a hunting operation, to the full detriment of the reliability and energy efficiency of the machine.

It should also be noted that since the measurement of the superheating temperature Tsh is relatively delayed, the instability is conditioned mainly by the variability of the saturation pressure Pse.

Therefore, if the system is provided with a low pressure circuit, i.e., the assembly constituted by the evaporator(s) and pipes for return to the compressor, which has a considerable internal volume, the variation of the saturation pressure Pse measured during cyclic operation is mitigated, allowing an acceptably stable operation.

This is the case, for example, of so-called split air-conditioning units, with generally rather long lines and with many evaporators that operate independently.

If instead the refrigeration machine is provided with a single evaporator whose internal volume is modest and which is installed close to the compressor, the flywheel effect of the circuit is negligible, worsening the described drawbacks; this is the typical case of refrigeration machines with plate exchangers.

Therefore, the need is currently felt to obtain a control of the thermostatic valve that allows a reliable and durable operation thereof, overcoming the unavailability of a stable and reliable measurement of the superheating temperature Tsh and the inherent slowness of modulation of currently available thermostatic valves.

The aim of the present invention is to provide a method for controlling a motorized thermostatic valve of a refrigeration machine provided with a cyclic pumping compressor, and a control device that performs the method, which allow to meet this requirement, allowing to obtain a control of the motorized thermostatic valve that reduces its functional instability with respect to the instability that is present in currently known machines.

Within this aim, an object of the invention is to propose a control method and a control device that performs it which allow a less onerous actuation of the motorized thermostatic valve, in order to obtain a longer average life from it than the thermostatic valves used in currently known machines.

Another object of the invention is to provide a control method that is simple and easy to perform.

Another object of the invention is to propose a control device that is structurally simple and easy to use and can be manufactured with relatively low costs.

This aim, as well as these and other objects that will become better apparent hereinafter, are achieved by a method for controlling a motorized thermostatic valve of a refrigeration machine provided with a cyclic pumping compressor, characterized in that it comprises a sub-process which is repeated in consecutive cycles when a predefined sampling time $\Delta t$ elapses, comprising

- a step for calculating a virtual superheating parameter SHv of the refrigeration fluid at the output of an evaporator of said machine,
- a step for modulating said motorized thermostatic valve on the basis of the calculated value of said virtual superheating parameter SHv,

said virtual superheating parameter SHv being calculated, in a current cycle of said cycles, as a weighted algebraic combination of

- a difference SHa between a superheating temperature Tsh and a saturation temperature Tse of said refrigeration fluid at said output, i.e., SHa = Tsh-Tse,
- a previous virtual superheating parameter SHvp, whose value is equal to the value assumed by said virtual superheating parameter SHv in the cycle that preceded said current cycle, if this is not the first cycle, otherwise with a value equal to a predefined value SHvo.

Moreover, this aim and these and other objects that will become better apparent hereinafter are achieved by a device for controlling a motorized thermostatic valve of a refrigeration machine provided with a cyclic pumping compressor, provided with means for functional connection

- to a pressure sensor and to a temperature sensor, which are adapted respectively to detect a saturation pressure Pse and a superheating temperature Tsh of the refrigeration fluid at the output of an evaporator of said machine,
- to a device for the management of said cyclic compressor, in order to receive from it an inactivity time signal $t_i$,

characterized in that it comprises

- means for performing said control method and
- means for modulating said motorized thermostatic valve which are functionally connected to said actuation means in order to receive from them the value of said virtual superheating parameter SHv calculated by means of said control method, said modulation means being adapted to perform said modulation step.

Further characteristics and advantages of the invention will become better apparent from the following detailed description of a preferred but not exclusive embodiment of the control method and of the control device that performs it according to the invention, illustrated by way of non-limiting example in the accompanying drawings, wherein:

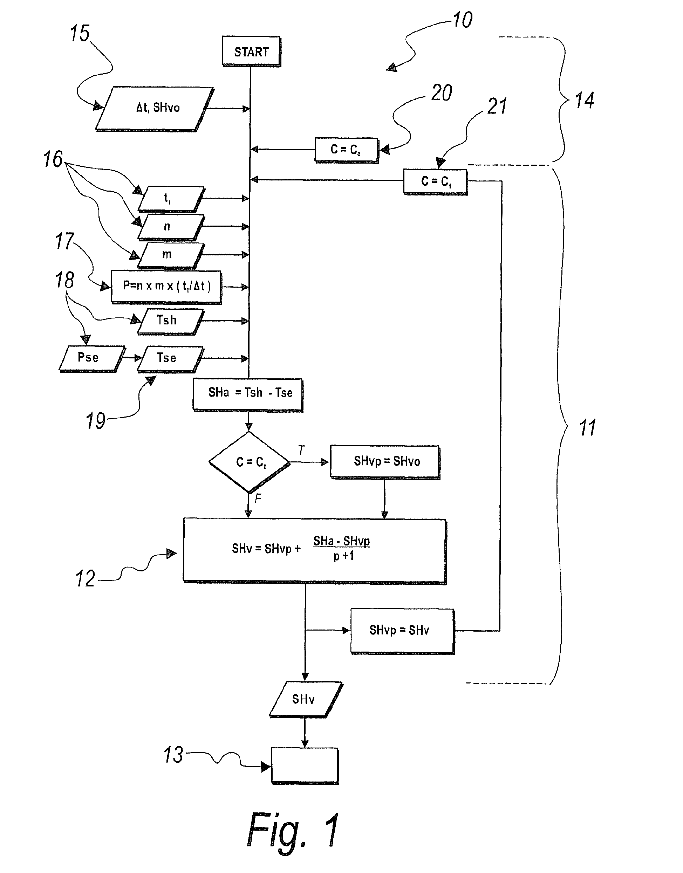

Figure 1 is a flowchart of a method according to the invention;
Figure 2 is a simplified diagram of a refrigeration machine provided with a control device according to the invention;
Figure 3 plots charts of functional parameters computed in a control method according to the invention.

It is noted that anything found to be already known during the patenting process is understood not to be claimed and to be the subject of a disclaimer.
With reference to the figures, the reference numeral 10 generally designates a method for controlling a motorized thermostatic valve 100 of a refrigeration machine 101 provided with a cyclic pumping compressor 102.
The control method 10 according to the invention has a particularity in that it comprises a sub-process 11, which is repeated in consecutive cycles when a predefined sampling time $\Delta t$ elapses and comprises

- a step 12 for calculating a virtual superheating parameter SHv of the refrigeration fluid at the output 103 of an evaporator 104 of a refrigeration machine 101,
- a step 13 for modulating the motorized thermostatic valve 100 on the basis of the calculated value of the virtual superheating parameter SHv.

The virtual superheating parameter SHv is calculated, in a current cycle of such cycles, as a weighted algebraic combination of

- a difference SHa between a superheating temperature Tsh and a saturation temperature Tse of the refrigeration fluid at the output 103, i.e., SHa = Tsh-Tse,
- a previous virtual superheating parameter SHvp, whose value is equal to the value assumed by the virtual superheating parameter SHv in the cycle that preceded the current cycle if this is not the first cycle, otherwise with a value equal to a predefined value SHvo.

The value SHvo can conveniently be set as a predefined starting value or as the stored value of the last value assumed by the virtual superheating parameter SHv.
Advantageously, such weighted algebraic combination is

$$SHv = SHvp + \frac{(SHa - SHvp)}{(p+1)} \quad ,$$

where p is a weight parameter that is calculated as a predefined function

- of the sampling time $\Delta t$,
- of an inactivity time $t_i$ of the cyclic pumping compressor 102, which with respect to a time reference $t_c$ of the compressor 102 is complementary to an activity time $t_a$, i.e., $t_c = t_i + t_a$,
- of a factor n of dynamic behavior of the refrigeration machine 101, and
- of an index parameter m of a pattern of the compressors of the refrigeration machine 101.

Preferably, the predefined function is

$$p = n \cdot m \cdot \left( \frac{ti}{\Delta t} \right) \quad ,$$

where conveniently

- the index parameter m is given by the ratio between the instantaneous power delivered by the cyclic pumping compressor 102 and is therefore equal to the rated power thereof multiplied by the ratio $t_a/t_c$, indicated hereinafter as Wcp, and the sum of the latter with the rated power of additional active compressors, referenced hereinafter as Wft, which cooperate with the cyclic pumping compressor 102 in pumping the refrigeration fluid from the evaporator 104, i.e.,

$$m = \frac{Wcp}{(Wcp + Wft)} \quad ,$$

- the factor n is a constant or a calculated value in a self-adaptive form as a function of the behavior of the process for regulating the refrigeration machine 101, representing its dynamic behavior.

Conveniently, the factor n is defined as increasing in proportion to the suddenness of the variation of the measurement of the superheating, i.e., of the difference SH, and in inverse proportion to the thermal inertia of the evaporator 104, with respect to its internal volume and/or its thermal mass.

Thus, for a refrigeration machine 101 provided with a single compressor, which is the cyclic pumping compressor 102, then Wft = 0 and m = 1.

Otherwise, in refrigeration machines with fixed pumping compressors that cooperate with a cyclic pumping compressor to provide the required refrigeration power, not shown in the accompanying figures, Wft is equal to the sum of the rated powers of the fixed pumping compressors that are active.

Modulation of the refrigeration power provided by these machines is in fact performed by activating or deactivating fixed pumping compressors, which provide power in steps, and by modulating the inactivity time $t_i$ of the cyclic pumping compressor.

Moreover, the control method 10 advantageously comprises a step 14 for setting prior to the sub-process 11, which comprises an initial setting 15 of the sampling time $\Delta t$ and of the predefined value SHvo.

Further, preferably the sub-process 11 comprises a reception 16

- of the inactivity time $t_i$, of the cyclic pumping compressor 102,
- of the factor n, which can be a fixed constant or can be recalculated on the basis of the development of the dynamic behavior of the refrigeration machine 101,
- of the index parameter m, which is variable as a function of the power that is currently delivered and of the number of compressors in operation.

Moreover, the sub-process 11 advantageously comprises

- an assignment 17 of the value

$$p = n \cdot m \cdot \left( \frac{ti}{\Delta t} \right)$$

to the weight parameter p,
- a step 18 for acquisition of the superheating temperature Tsh and of a saturation pressure Pse of the refrigeration fluid at the output 103,
- a step 19 for obtaining the saturation temperature Tse on the basis of the value of the saturation pressure Pse according to the known thermodynamic correlations.

The preliminary setting step 14 conveniently further comprises an additional setting 20 of a redefined cycle index c, which is equal to a first-cycle index $c_0$, indicating that the current cycle is the first cycle.

Conveniently, the sub-process 11 comprises a step 21 for cycling setting of the redefined cycle index c which is equal to a non-first cycle index $c_1$, indicating that the current cycle is not the first cycle.

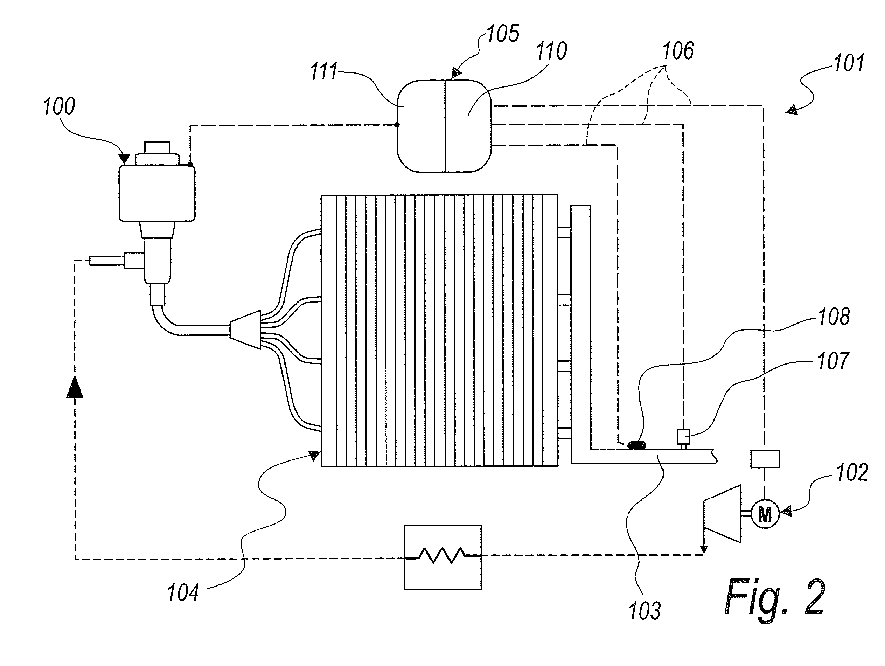

With particular reference to Figure 2, it illustrates by way of non-limiting example a control device 105 of the motorized thermostatic valve 100 of the refrigeration machine 101 provided with the cyclic pumping compressor 102, which has means 106 for functional connection

- to a pressure sensor 107 and to a temperature sensor 108, which are adapted respectively to detect a saturation pressure Pse and a superheating temperature Tsh of the refrigeration fluid at the output 103 of the evaporator 104 of the refrigeration machine 101,
- to a device 109 for managing the cyclic pumping compressor 102 in order to receive from it a signal of its inactivity time $t_i$.

The control device 105 has a particularity in that it comprises

- means 110 for performing the control method 10, which are conveniently provided by means of an electronic circuit, and
- means 111 for modulating the motorized thermostatic valve 100, which are functionally connected to the actuation means 106 in order to receive from them the value of the virtual superheating parameter SHv that is calculated by means of the control method 10, the modulation means 111 being adapted to perform the modulation step 13.

Advantageously, the modulation means 111 are provided by means of an electronic device that controls an electric step motor that moves a flow control element of the motorized thermostatic valve 100.

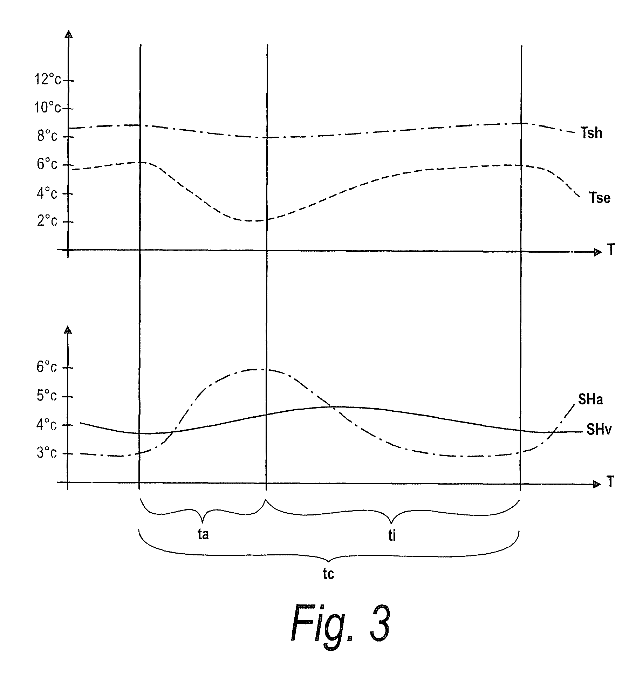

With particular reference to Figure 3, it exemplifies the time profile of the characteristic values of the refrigeration machine 101, i.e.,

Tsh, instantaneous measurement of the superheating temperature of the refrigeration fluid at the output 103,

Tse, instantaneous estimate of the saturation temperature of the refrigeration fluid at the output 103,

SHa, difference between Tsh and Tse, which represents the instantaneous estimate of the superheating of the refrigeration fluid at the output 103,

SHv, virtual superheating parameter calculated as

$$SHv = SHvp + \frac{(SHa - SHvp)}{(p+1)},$$

where the following have been assumed as example of operation,

- $\Delta t$ = 1 second,
- time reference of the compressor 102 tc = 25 seconds,
- duration of the active step ta = 8 seconds,
- duration of the inactive step $t_i$ = 17 seconds.

In this operating condition, the saturation temperature Tse, measured by converting the signal of the pressure sensor 107, oscillates by approximately 4°C, which is equivalent to a pressure variation of more than 1 bar for a refrigeration fluid R410A.

The measurement of the superheating temperature Tsh, affected by thermal inertia phenomena, is rather stable on its average value of approximately 8-9°C.

It is evident in the chart that the oscillation of the virtual superheating parameter SHv, approximately 0.8°C, is much smaller than the difference SHa, approximately 3.0°C, although the average value of the two profiles in the interval tc considered is obviously substantially identical, approximately 4.2°C.

It has thus been found surprisingly that the control method 10 allows to provide an adjustment of the flow-rate of refrigeration fluid that is less onerous than currently known control methods, which are based on the SHa difference.

The less substantial variation of the virtual superheating parameter SHv with respect to the difference SHa in fact produces a control, on the part of the control device 10, that forces a less onerous modulation of the motorized thermostatic valve 100.

The operation of the control device 10 according to the invention is as follows.

Upon starting the refrigeration machine 101, the actuation means 110 perform the control method 10.

Then, on the basis of the detected superheating temperature Tsh, of the factor n, of the inactivity time $t_i$, of the parameter m that indicates the number and refrigerating power that is delivered instantaneously by the active compressors, and of the estimate of the saturation temperature Tse, the value of the virtual superheating parameter SHv is calculated cyclically.

This value is transmitted to the modulation means 111, which perform the modulation step 13.

The modulation step 13 consists in modulating the opening of the motorized thermostatic valve 100 in a per se known manner so as to keep the value of the virtual superheating parameter SHv equal to a predefined optimum value.

In practice it has been found that the invention achieves the intended aim and objects, providing a method for controlling a motorized thermostatic valve and a control device that performs the method which allow to obtain a control of the motorized thermostatic valve that reduces its functional instability with respect to the instability exhibited in currently known machines by using, as a reference parameter for the modulation of the motorized thermostatic valve, the value of the virtual superheating parameter, which has a lower variability, with an equal mean value, than the difference between the superheating temperature and the saturation temperature of the fluid in output from the evaporator, which is used currently for this purpose.

Moreover, a control method and a control device that performs the method, according to the invention, allow a less onerous actuation of the motorized thermostatic valve, obtaining a longer average life thereof with respect to thermostatic valves used in currently known machines.

The invention thus conceived is susceptible of numerous modifications and variations, all of which are within the scope of the appended claims; all the details may further be replaced with other technically equivalent elements.

In practice, the materials used, as well as the contingent shapes and dimensions, may be any according to requirements and to the state of the art.

The disclosures in Italian Patent Application No. PD2008A000355 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for controlling a motorized thermostatic valve (100) of a refrigeration machine (101) provided with a cyclic pumping compressor (102), **characterized in that** it comprises a sub-process (11) which is repeated in consecutive cycles when a predefined sampling time $\Delta t$ elapses, comprising

 - a step (12) for calculating a virtual superheating parameter SHv of the refrigeration fluid at the output (103) of an evaporator (104) of said refrigeration machine (101),
 - a step (13) for modulating said motorized thermostatic valve (100) on the basis of the calculated value of said virtual superheating parameter SHv,

 said virtual superheating parameter SHv being calculated, in a current cycle of said cycles, as a weighted algebraic combination of

 - a difference SHa between a superheating temperature Tsh and a saturation temperature Tse of said refrigeration fluid at said output (103), i.e., SHa = Tsh-Tse,
 - a previous virtual superheating parameter SHvp, whose value is equal to the value assumed by said virtual superheating parameter SHv in the cycle that preceded said current cycle, if this is not the first cycle, otherwise with a value equal to a predefined value SHvo.

2. The control method according to claim 1, **charac-**

**terized in that** said weighted algebraic combination is

$$SHv = SHvp + \frac{(SHa - SHvp)}{(p+1)},$$

where p indicates a weight parameter that is calculated as a predefined function

 - of said sampling time $\Delta t$,
 - of an inactivity time $t_i$ of said cyclic pumping compressor (102),
 - of a factor n of dynamic behavior of said refrigeration machine (101), and
 - of an index parameter m of a pattern of the compressors of the refrigeration machine (101).

3. The control method according to claim 2, **characterized in that** said predefined function is

$$p = n \cdot m \cdot \left(\frac{ti}{\Delta t}\right).$$

4. The control method according to claim 1, **characterized in that** said index parameter m is given by the ratio between the instantaneous power delivered by said cyclic pumping compressor (102) Wcp and the sum of said power and of the overall rated power of additional compressors in said instant of operation Wft, which cooperate with said cyclic pumping compressor (102) in pumping said refrigeration fluid, i.e.,

$$m = \frac{Wcp}{(Wcp + Wft)}.$$

5. The control method according to claim 2, **characterized in that** it comprises a setting step (14) that is preliminary to said sub-process (11), which comprises an initial setting (15) of said sampling time $\Delta t$ and of said predefined value SHvo.

6. The control method according to claim 1, **characterized in that** said sub-process (11) comprises

 - a reception (16) of said inactivity time $t_i$ of said cyclic pumping compressor (102), of said factor n, and of said index parameter m,
 - an assignment (17) to the weight parameter p of the value

$$p = n \cdot m \cdot \left(\frac{ti}{\Delta t}\right)$$

,

- a step (18) of acquisition of said superheating temperature Tsh and of a saturation pressure Pse of said refrigeration fluid at said output (103),
- a step (19) for obtaining said saturation temperature Tse on the basis of the value of said saturation pressure Pse.

7. The control method according to claim 5, **characterized in that** said preliminary setting step (14) comprises an additional setting (20) of a redefined cycle index c, which is equal to a first-cycle index $c_0$, indicating that said current cycle is said first cycle.

8. The control method according to claim 7, **characterized in that** said sub-process (11) comprises a cyclic setting step (21) of said redefined cycle index c equal to a non-first cycle index $c_1$, indicating that said current cycle is not said first cycle.

9. A device for controlling a motorized thermostatic valve (100) of a refrigeration machine (101) provided with a cyclic pumping compressor (102), provided with means for functional connection (106)

- to a pressure sensor (107) and to a temperature sensor (108), which are adapted respectively to detect a saturation pressure Pse and a superheating temperature Tsh of the refrigeration fluid at the output (103) of an evaporator (104) of said refrigeration machine (101),
- to a device (109) for managing said cyclic pumping compressor (102) in order to receive an inactivity time signal $t_i$ from it,

**characterized in that** it comprises

- means (110) for performing said control method and
- means (111) for modulating said motorized thermostatic valve (100), which are functionally connected to said actuation means (110) in order to receive from them the value of said virtual superheating parameter SHv calculated by means of said control method, said modulation means (107) being adapted to perform said modulation step (13).

*15*

START

*10*

Δt, SHvo

*20* *21* *14*

C = C₀

*16*

C = C₁

t₁

n

m

*17*

P = n x m x ( t₁/Δt )

*18*

Tsh

Pse

Tse

*19*

SHa = Tsh - Tse

*11*

C = C₀ — T → SHvp = SHvo

F

$$SHv = SHvp + \frac{SHa - SHvp}{p + 1}$$

*12*

SHvp = SHv

SHv

*13*

## Fig. 1

Fig. 2

*Fig. 3*

Europäisches
Patentamt

European
Patent Office

Office européen
des brevets

## EUROPEAN SEARCH REPORT

**Application Number**

EP 09 17 7665

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 956 323 A2 (SAMSUNG ELECTRONICS CO LTD [KR]) 13 August 2008 (2008-08-13) * paragraph [0028]; figures 1-3 * ----- | 1-2,9 | INV. F25B41/06 |
| X | US 5 791 155 A (TULPULE SHARAYU [US]) 11 August 1998 (1998-08-11) * column 3, line 17 - column 10, line 61; figures 1-6 * ----- | 1-2,9 | |
| X | DE 195 06 143 A1 (DANFOSS AS [DK]) 5 September 1996 (1996-09-05) * page 1, line 10 - page 5, line 43; figures 1-3 * ----- | 1-2,9 | |
| X | DE 37 39 980 A1 (NIPPON DENSO CO [JP]) 26 May 1988 (1988-05-26) * column 10, line 20 - column 14, line 17; figures 1-14 * ----- | 1-2,9 | |
| X | EP 1 707 903 A2 (FUJIKOKI CORP [JP]) 4 October 2006 (2006-10-04) * paragraph [0019] - paragraph [0087] * ----- | 1-2,9 | TECHNICAL FIELDS SEARCHED (IPC) F25B |

The present search report has been drawn up for all claims

| Place of search | Date of completion of the search | Examiner |
|---|---|---|
| Munich | 8 January 2010 | Szilagyi, Barnabas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 17 7665

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2010

| Patent document cited in search report | | Publication date | Patent family member(s) | | Publication date |
|---|---|---|---|---|---|
| EP 1956323 | A2 | 13-08-2008 | CN | 101241350 A | 13-08-2008 |
| | | | JP | 2008190847 A | 21-08-2008 |
| | | | KR | 20080073475 A | 11-08-2008 |
| US 5791155 | A | 11-08-1998 | AU | 727224 B2 | 07-12-2000 |
| | | | AU | 6992998 A | 10-12-1998 |
| | | | CN | 1201887 A | 16-12-1998 |
| | | | DE | 69809331 D1 | 19-12-2002 |
| | | | DE | 69809331 T2 | 18-09-2003 |
| | | | EP | 0883047 A1 | 09-12-1998 |
| | | | ES | 2183290 T3 | 16-03-2003 |
| | | | JP | 3375543 B2 | 10-02-2003 |
| | | | JP | 11148750 A | 02-06-1999 |
| DE 19506143 | A1 | 05-09-1996 | AU | 4783596 A | 11-09-1996 |
| | | | CN | 1175996 A | 11-03-1998 |
| | | | WO | 9626399 A1 | 29-08-1996 |
| | | | EP | 0811136 A1 | 10-12-1997 |
| | | | US | 6018959 A | 01-02-2000 |
| DE 3739980 | A1 | 26-05-1988 | JP | 2020817 C | 19-02-1996 |
| | | | JP | 7054207 B | 07-06-1995 |
| | | | JP | 63131967 A | 03-06-1988 |
| | | | US | 4807445 A | 28-02-1989 |
| EP 1707903 | A2 | 04-10-2006 | JP | 2006266533 A | 05-10-2006 |
| | | | US | 2006213208 A1 | 28-09-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT PD20080355 A